# EUROPEAN PATENT APPLICATION

(11) **EP 2 711 927 A2**
(43) Date of publication of application: **26.03.2014**
(21) Application number: 13179735.9
(22) Date of filing: 08.08.2013
(51) Int. Cl.: G11B 7/09

(54) **Lens driving device, information recording and playback apparatus, and electronic instrument**

(30) Priority: 24.09.2012 JP 2012210077
(71) Applicant: Kabushiki Kaisha Toshiba, Tokyo 105-8001 (JP)
(72) Inventor: Hiroshi, Shinozuka, Tokyo, 105-8001 (JP); Kazuo, Watabe, Tokyo, 105-8001 (JP)
(74) Representative: Henkel, Breuer & Partner

(57) **Abstract**

According to one embodiment, a lens driving device includes a movable member (414), a fixed member (401, 407), and a magnet (405, 406). The movable member is configured to retain a lens (418) and a coil (421, 422). The fixed member is configured to support the movable member such that the movable member is movable in an optical axis direction of the lens using an elastic member (410, 411). The magnet is configured to generate a driving force for the movable member by interaction with the coil provided in the fixed member. At least one of the coil and the magnet is provided so as to be projected from the fixed member in a direction orthogonal to the optical axis of the lens.

## Description

Embodiments described herein relate generally to a lens driving device, an information recording and playback apparatus, and an electronic instrument.

As is well known, nowadays there is developed what is called a super-multilayer optical disk including at least 10 recording layers. This kind of optical disk includes a structure in which one guide layer is provided for plural recording layers, recording and playback are performed to any recording layer based on the same guide layer.

Specifically, using the same objective lens, a blue laser beam is focused on the desired recording layer while a red laser beam is focused on the guide layer. A position of the objective lens is controlled such that the red laser beam is guided along the guide layer, and the recording and the playback are performed to the desired recording layer using the blue laser beam through the objective lens.

In order that the red laser beam and the blue laser beam are focused on the guide layer and the desired recording layer using the same objective lens, it is necessary to provide two optical paths, namely, a red laser beam optical path and a blue laser beam optical path. The structure becomes more complex, which results in enlargement of the recording and playback instrument.

A general architecture that implements the various features of the embodiments will now be described with reference to the drawings. The drawings and the associated descriptions are provided to illustrate the embodiments and not to limit the scope of the invention.
FIG. 1 is a view illustrating an example of a sectional structure of an optical disk having a super-multilayer structure;
FIG. 2 is a block configuration diagram illustrating an example of a signal processing system of an information recording and playback apparatus according to an embodiment that performs recording and playback to the optical disk;
FIG. 3 is a view illustrating an example of an optical system of an optical pickup head unit used in the information recording and playback apparatus of the embodiment;
FIG. 4 is a view illustrating an example of a recording and playback operation that is performed to the optical disk by the optical pickup head unit of the embodiment;
FIG. 5 is a perspective view illustrating an example of a lens actuator constituting the optical pickup head unit of the embodiment;
FIGS. 6A, 6B, and 6C are views illustrating an example of the lens actuator of the embodiment when the lens actuator is viewed from a front side, an upper side, and a side surface;
FIG. 7 is a perspective view illustrating a first modification of the lens actuator of the embodiment;
FIG. 8 is a perspective view illustrating a second modification of the lens actuator of the embodiment;
FIG. 9 is a perspective view illustrating a third modification of the lens actuator of the embodiment; and
FIG. 10 is a block configuration diagram illustrating an example of a mobile information terminal to which the lens actuator of the embodiment is applied.

Various embodiments will be described hereinafter with reference to the accompanying drawings.

In general, according to one embodiment, a lens driving device includes a movable member, a fixed member, and a magnet. The movable member is configured to retain a lens and a coil. The fixed member is configured to support the movable member such that the movable member is movable in an optical axis direction of the lens using an elastic member. The magnet is configured to generate a driving force for the movable member by interaction with the coil provided in the fixed member. At least one of the coil and the magnet is provided so as to be projected from the fixed member in a direction orthogonal to the optical axis of the lens.

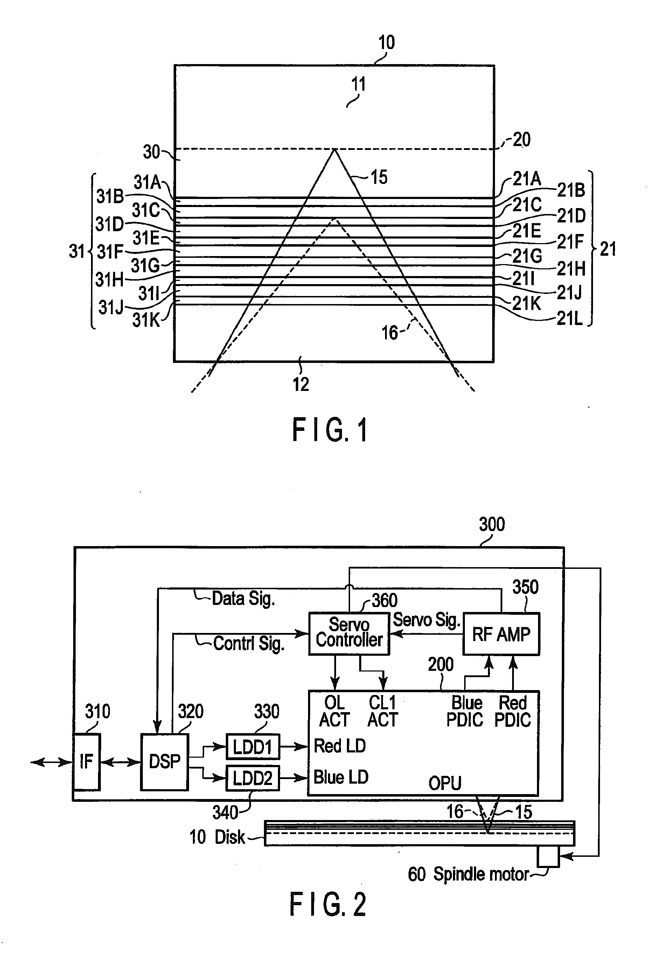

FIG. 1 illustrates a sectional structure of an optical disk 10 of the embodiment. The optical disk 10 includes plural recording and playback layers, and information is recorded in a recording film by a laser beam emitted from an optical pickup (OPU). For example, an upper surface shape of the optical disk 10 is a circle having a diameter of 120 mm.

The optical disk 10 includes a structure in which a guide layer 20 and a recording layer 21 (including recording layers 21A to 21L) are formed on a substrate 11. In the guide layer 20, a guide groove or a pit string is formed in order to generate a servo signal during recording and playback. The recording layer 21 is also called a recording layer group, and the recording layer group includes 12 recording layers 21A to 21L and 11 intermediate layers 31A to 31K.

The recording layers 21A to 21L and the intermediate layers 31A to 31L are alternately disposed. The guide layer 20 and the recording layer 21 are formed in the order of the guide layer 20 and the recording layer 21 from a side of the substrate 11, and recording and playback laser beams 15 and 16 emitted from the optical pickup are incident to the optical disk 10 from an opposite side of the substrate 11. A cover layer 12 is formed on the side of the recording layer 21 that is opposite the substrate 11.

For example, the guide groove or the pit string on the guide layer 20 includes a spiral structure having a depth of 60 nm and a track pitch of 0.64 µm, and a ratio of a recess and a projection in section is substantially 1:1. There is no limitation to the groove depth (the pit depth) or the track pitch. For example, a deep groove (deep pit) having a depth of about 100 nm may be formed, or a shallow groove (shallow pit) having a depth of about 20 nm may be formed. For example, the groove (the pit) having the narrow track pitch of about 0.32 µm or the wide track pitch of about 0.74 µm or about 1.2 µm may be formed.

A track structure may be a concentric ring structure, spiral structure, or what is called a single spiral structure in which a recess and projection are switched every turn. For example, address information is applied to the guide groove by wobble. As used herein, "wobble" means meandering in a direction perpendicular to a track extending direction of the guide groove in a plane of the optical disk 10.

An intermediate layer 30 having optical transparency is formed between the guide layer 20 and the recording layer 21A closest to the guide layer 20. On the other hand, each of intermediate layers 31A to 31K having optical transparency are also formed between the recording layers adjacent to each other in the recording layer 21.

The cover layer 12 has optical transparency. For example, the cover layer 12 has a thickness of 53 µm. There is no particular limitation to the cover layer 12 as long as the cover layer 12 is made of a transparent material. Preferably the cover layer 12 is made of synthetic resins, such as polycarbonate and PMMA, or glass. The information is recorded in the recording layer 21. The recording layer 21 is changed by the laser beam emitted from the optical pickup, and a mark corresponding to the information is recorded in the recording layer 21. For example, the recording layer 21 is a phase change recording film including a multilayer film made of a phase change material or a recordable recording film made of organic dye. For example, one recording layer 21 has a thickness of 0.2 µm or less. The recording layer 21 is much smaller than the cover layer 12 and the intermediate layer 31 in thickness.

In recording and playing back the optical disk 10, the guide layer 20 and the recording layer 21 are irradiated with the laser beams 15 and 16, respectively. The laser beams 15 and 16 have different wavelengths because optical paths are easily separated in the optical pickup. For example, the laser beam 15 is a red laser beam, and the laser beam 16 is a blue-violet laser beam.

FIG. 2 schematically illustrates an example of a signal processing system of an information recording and playback apparatus 300 that performs the recording and playback to the optical disk 10 including the above super-multilayer structure. The information recording and playback apparatus 300 mainly includes an interface (IF) 310, a signal processing unit (DSP) 320, laser drivers (LDD1) 330 and (LDD2) 340, an optical pickup head unit (OPU) 200, an RF amplifier IC (RF AMP) 350, a servo controller 360, and a spindle motor 60. The optical disk 10 including the super-multilayer structure is placed on the spindle motor 60.

The interface 310 is a connection module that exchanges a command and data with an external host instrument (not illustrated), and the interface 310 is compatible with a specific standard (for example, SATA).

The signal processing unit 320 transmits and receives the command and the data to and from the external host instrument through the interface 310, converts the data, transmits a data pulse or a control signal to the laser drivers 330 and 340, transmits a control signal to the servo controller 360, and receives a data signal from the RF amplifier IC 350.

The laser drivers 330 and 340 receive the data pulse or the control signal from the signal processing unit 320, perform conversion into a driving pulse, and transmit the driving pulse to the optical pickup head unit 200.

The optical pickup head unit 200 irradiates the guide layer 20 and recording layer 21 of the optical disk 10 with the laser beams 15 and 16 according to the driving pulse from the laser drivers 330 and 340, receives light reflected from the guide layer 20 and the recording layer 21, and transmits a signal corresponding to a change in intensity of the reflected light to the RF amplifier IC 350.

The RF amplifier IC 350 amplifies the signal from the optical pickup head unit 200 to generate a servo signal and the data signal, and the RF amplifier IC 350 transmits the servo signal and the data signal to the servo controller 360 and the signal processing unit 320, respectively.

The servo controller 360 receives the servo signal from the RF amplifier IC 350, converts the servo signal into an actuator driving signal and a spindle motor driving signal, transmits the actuator driving signal to the optical pickup head unit 200, and transmits the drive signal to the spindle motor 60.

The spindle motor 60 receives the spindle motor driving signal from the servo controller 360, and rotates the placed optical disk 10 about an axis perpendicular to the extending direction of the optical disk 10.

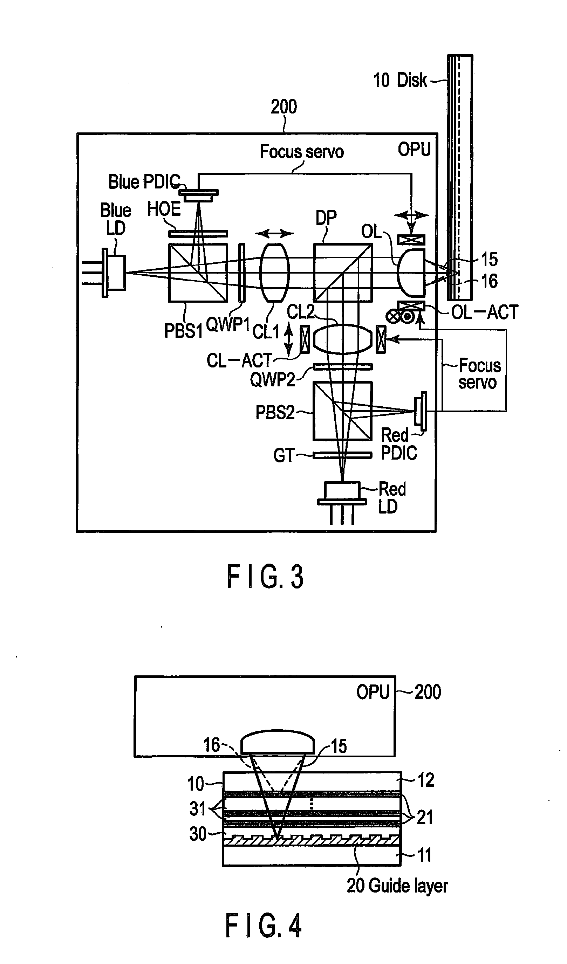

FIG. 3 illustrates an example of an optical system of the optical pickup head unit 200 used in the information recording and playback apparatus 300. The optical pickup head unit (OPU) 200 mainly includes a blue-violet laser (Blue LD), a red laser (Red LD), polarization beam splitters (PBS1 and PBS2), quarter-wave plates (QWP1 and QWP2), collimator lenses (CL1 and CL2), an objective lens (OL), a hologram element (HOE), a blue-violet photodetector IC (Blue PDIC), a red photodetector IC (Red PDIC), a diffraction element (GT), a dichroic prism (DP), a collimator lens actuator (CL-ACT), and an objective lens actuator (OL-ACT).

For example, the blue-violet laser (Blue LD) is a semiconductor laser having a wavelength of 405 nm, and emits a recording and playback laser beam. The blue-violet laser is controlled by the laser driver 340 of the information recording and playback apparatus 300 in FIG. 2.

The polarization beam splitter (PBS1) transmits incident light from the blue-violet laser, and the polarization beam splitter (PBS1) reflects the reflected light of the blue-violet laser from the optical disk 10, in which is a polarization plane rotated by 90 degrees with respect to the incident light.

The quarter-wave plate (QWP1) transmits the incident light from the blue-violet laser, and converts linear polarization into circular polarization. The quarter-wave plate (QWP1) transmits the reflected light of the blue-violet laser from the optical disk 10, and converts the circular polarization into the linear polarization. At this point, the reflected light has the linear polarization in which the polarization plane differs from that of the incident light by 90 degrees. For example, when the incident light has P-polarization, the reflected light has S-polarization.

The collimator lens (CL1) converts the incident light from the blue-violet laser into substantially parallel light.

The objective lens (OL) focuses the light emitted from the blue-violet laser on the recording layer 21 of the optical disk 10. The objective lens includes a wavelength selectivity aperture on a laser beam source side, whereby the red laser beam 15 differs from the blue-violet laser beam 16 in numerical aperture. For example, the objective lens has a numerical aperture of 0.85 for the blue-violet laser beam 16, and has a numerical aperture of 0.65 for the red laser beam 15.

The dichroic prism (DP) transmits the incident light from the blue-violet laser, and reflects the incident light from the red laser.

For example, the red laser (Red LD) is a semiconductor laser having a wavelength of 655 nm, and emits a tracking servo laser beam. The red laser is controlled by the laser driver 330 of the information recording and playback apparatus 300.

The diffraction element (GT) divides the red laser beam 15 into three beams by diffraction. The three beams become one main beam and two sub-beams on the optical disk 10.

The polarization beam splitter (PBS2) transmits incident light from the red laser, and the polarization beam splitter (PBS2) reflects the reflected light of the red laser from the optical disk 10, in which is a polarization plane rotated by 90 degrees with respect to the incident light.

The quarter-wave plate (QWP2) transmits the incident light from the red laser, and converts the linear polarization into the circular polarization. The quarter-wave plate (QWP2) transmits the reflected light of the red laser from the optical disk 10, and converts the circular polarization into the linear polarization. At this point, the reflected light has the linear polarization in which the polarization plane differs from that of the incident light by 90 degrees. For example, when the incident light has P-polarization, the reflected light has S-polarization.

The collimator lens (CL2) converts the incident light from the red laser into substantially parallel light.

The hologram element (HOE) outputs the blue-violet laser, transmits a luminous flux reflected from the recording layer 21 of the optical disk 10, and diffracts a predetermined region of the luminous flux with a predetermined angle.

The blue-violet photodetector IC (Blue PDIC) receives the blue-violet laser beam from the HOE, generates a current according to a light receiving amount, converts the current into a voltage using a current-voltage conversion circuit therein, and outputs the voltage.

The red photodetector IC (Red PDIC) receives the red laser beam reflected from the PBS2, generates the current according to the light receiving amount, converts the current into the voltage using a current-voltage conversion circuit therein, and outputs the voltage.

The collimator lens actuator (CL-ACT) drives the collimator lens (CL2) in a vertical direction in a paper surface such that the red laser beam 15 emitted from the objective lens moves in the optical axis direction (a focus direction) on the optical disk 10.

The objective lens actuator (OL-ACT) drives the objective lens in a crosswise direction in the paper surface such that the laser beam output from the objective lens moves in the optical axis direction (the focus direction) on the optical disk 10. The objective lens actuator (OL-ACT) also drives the objective lens in the direction perpendicular to the paper surface such that the laser beam output from the objective lens moves in the direction (a radial direction) perpendicular to a recording track on the optical disk 10.

An operation of the information recording and playback apparatus 300 in recording the information will be described below with reference to FIGS. 2 and 4. The external host instrument (not illustrated) transmits a user data recording command and recording target data, and the user data recording command and the recording target data are transmitted to the signal processing unit 320 through the interface 310. Therefore, the signal processing unit 320 starts a data recording process according to the received user data recording command.

The signal processing unit 320 transmits the driving signal to the laser drivers 330 and 340, and turns on the red laser (Red LD) and the blue-violet laser (Blue LD) with playback power. The servo controller 360 transmits the spindle motor driving signal to the spindle motor 60, and rotates the optical disk 10 at a predetermined rotation speed.

The signal processing unit 320 transmits a focus search control signal to the servo controller 360. In response to the input focus search control signal, the servo controller 360 performs simple harmonic vibration to the collimator lens (CL2) in the focus direction using the collimator lens actuator (CL-ACT). Therefore, a focal point of the red laser beam 15, which passes through the collimator lens (CL2) to which the simple harmonic vibration is performed and is output from the objective lens (OL), is repeatedly reciprocated in the vertical direction in relation to the guide layer 20 of the optical disk 10.

The light of the red laser beam 15 reflected from the guide layer 20 is focused on the red photodetector IC (Red PDIC). The red photodetector IC (Red PDIC) converts the current based on the reflected light amount into a voltage, and transmits the voltage to the RF amplifier IC 350. The RF amplifier IC 350 generates a focus error signal of the red laser beam 15 from the received voltage signal through a predetermined calculation, and transmits the focus error signal to the servo controller 360. For example, an astigmatism generating optical element (not illustrated) generates the focus error signal by a well-known astigmatism method.

Then, when the focus error signal is nearly zero, the servo controller 360 switches the simple harmonic vibration of the collimator lens (CL2) with the collimator lens actuator (CL-ACT) to driving based on the focus error signal, and the servo controller 360 draws the focus of the red laser beam 15 into the guide groove of the guide layer 20.

Then, the servo controller 360 draws the focus of the blue-violet laser beam 16 into the intended recording layer 21 on the optical disk 10. At this point, the objective lens actuator (OL-ACT) is driven to control the objective lens (OL) in the focus direction based on the focus error signal that the RF amplifier IC 350 generates from the voltage signal transmitted from the blue-violet photodetector IC (Blue PDIC), whereby the focus of the blue-violet laser beam 16 is drawn into the intended recording layer 21.

After the focuses of all the beams are drawn, the servo controller 360 draws the red laser beam 15 into the track formed by the guide groove on the guide layer 20 of the optical disk 10. At this point, the objective lens actuator (OL-ACT) is driven to control the objective lens (OL) in the tracking direction based on a tracking error signal that the RF amplifier IC 350 generates from the voltage signal transmitted from the red photodetector IC (Red PDIC), whereby the servo controller 360 draws the red laser beam 15 into the track on the guide layer 20. For example, the tracking error signal is generated by a well-known differential push-pull method.

Then, the signal processing unit 320 reads the data signal generated by the RF amplifier IC 350 based on the voltage signal transmitted from the red photodetector IC (Red PDIC), thereby playing back a current address.

In the case that the current address differs from the intended address, the signal processing unit 320 transmits a track jump control signal, which is the number of tracks corresponding to a difference between the current address and the intended address, to the servo controller 360. Based on the input track jump control signal, the servo controller 360 transmits the driving pulse to the objective lens actuator (OL-ACT) to move the red laser beam 15 to the desired track. At this point, the blue-violet laser beam 16 with which the optical disk 10 is irradiated through the same objective lens (OL) performs the same track movement.

When checking that the red laser beam 15 reaches the intended address, the signal processing unit 320 transmits a recording data series to the laser driver 340. The laser driver 340 generates the driving pulse according to the received recording data series, and transmits the driving pulse to the blue-violet laser (Blue LD) to perform the pulse driving of the blue-violet laser (Blue LD). Therefore, the blue-violet laser beam 16 emitted from the blue-violet laser is focused on the intended recording layer 21 of the optical disk 10 through the objective lens (OL), and a recording mark is formed according to the recording data series. Thus, the recording target data is recorded in the intended recording layer 21 of the optical disk 10.

An operation of the information recording and playback apparatus 300 in playing back the information will be described below with reference to FIG. 2. The external host instrument (not illustrated) transmits a user data playback command, and the user data playback command is transmitted to the signal processing unit 320 through the interface 310. Therefore, the signal processing unit 320 starts a data playback process according to the received user data playback command.

The signal processing unit 320 transmits the driving signal to the laser drivers 330 and 340, and turns on the red laser (Red LD) and the blue-violet laser (Blue LD) with playback power. The servo controller 360 transmits the spindle motor driving signal to the spindle motor 60, and rotates the optical disk 10 at a predetermined rotation speed.

The signal processing unit 320 transmits the focus search control signal to the servo controller 360. In response to the input focus search control signal, the servo controller 360 performs the simple harmonic vibration to the collimator lens (CL2) in the focus direction using the collimator lens actuator (CL-ACT). Therefore, the focal point of the red laser beam 15, which passes through the collimator lens (CL2) to which the simple harmonic vibration is performed and is output from the objective lens (OL), is repeatedly reciprocated in the vertical direction in relation to the guide layer 20 of the optical disk 10.

The light of the red laser beam 15 reflected from the guide layer 20 is focused on the red photodetector IC (Red PDIC). The red photodetector IC (Red PDIC) converts the current based on the reflected light amount into the voltage, and transmits the voltage to the RF amplifier IC 350. The RF amplifier IC 350 generates the focus error signal of the red laser beam 15 from the received voltage signal through the predetermined calculation, and transmits the focus error signal to the servo controller 360.

Then, when the focus error signal is nearly zero, the servo controller 360 switches the simple harmonic vibration of the collimator lens (CL2) with the collimator lens actuator (CL-ACT) to driving based on the focus error signal, and the servo controller 360 draws the focus of the red laser beam 15 into the guide groove of the guide layer 20.

Then, the servo controller 360 draws the focus of the blue-violet laser beam 16 into the intended recording layer 21 on the optical disk 10. At this point, the objective lens actuator (OL-ACT) is driven to control the objective lens (OL) in the focus direction based on the focus error signal that the RF amplifier IC 350 generates from the voltage signal transmitted from the blue-violet photodetector IC (Blue PDIC), whereby the focus of the blue-violet laser beam 16 is drawn into the intended recording layer 21.

After the focuses of all the beams are drawn, the servo controller 360 draws the red laser beam 15 into the track formed by the guide groove on the guide layer 20 of the optical disk 10. At this point, the objective lens actuator (OL-ACT) is driven to control the objective lens (OL) in the tracking direction based on the tracking error signal that the RF amplifier IC 350 generates from the voltage signal transmitted from the red photodetector IC (Red PDIC), whereby the servo controller 360 draws the red laser beam 15 into the track on the guide layer 20.

Then, the signal processing unit 320 reads the data signal generated by the RF amplifier IC 350 based on the voltage signal transmitted from the red photodetector IC (Red PDIC), thereby playing back a current address.

In the case that the current address differs from the intended address, the signal processing unit 320 transmits the track jump control signal, which is the number of tracks corresponding to the difference between the current address and the intended address, to the servo controller 360. Based on the input track jump control signal, the servo controller 360 transmits the driving pulse to the objective lens actuator (OL-ACT) to move the red laser beam 15 to the desired track. At this point, the blue-violet laser beam 16 with which the optical disk 10 is irradiated through the same objective lens (OL) performs the same track movement.

The blue-violet photodetector IC (Blue PDIC) converts the current, which is based on the amount of light of the blue-violet laser beam 16 reflected from the recording layer 21 of the optical disk 10, into the voltage, and the blue-violet photodetector IC (Blue PDIC) transmits the voltage to the RF amplifier IC 350. The RF amplifier IC 350 generates the tracking error signal of the blue-violet laser beam 16 from the received voltage signal through the predetermined calculation, and transmits the tracking error signal to the servo controller 360. In this case, for example, the tracking error signal is a Differential Phase Detection (DPD) signal or a push-pull signal, which is generated from a recorded mark string of the recording layer 21.

After determining that the red laser beam 15 reaches the track near the intended address, the signal processing unit 320 transmits a control signal to the servo controller 360 in order to separate the servo controller 360 from the tracking servo of the guide layer 20 with the red laser beam 15. Therefore, the servo controller 360 switches the driving of the objective lens actuator (OL-ACT) from the driving based on the tracking error signal of the red laser beam 15 to the driving based on the tracking error signal of the blue-violet laser beam 16, and draws the blue-violet laser beam 16 into the recorded track of the recording layer 21.

Then, the signal processing unit 320 reads the data signal generated by the RF amplifier IC 350 based on the voltage signal transmitted from the blue-violet photodetector IC (Blue PDIC), thereby playing back the current address of the recording layer 21 into which the blue-violet laser beam 16 is drawn.

In the case that the current address differs from the intended address, the signal processing unit 320 transmits the track jump control signal, which is the number of tracks corresponding to the difference between the current address and the intended address, to the servo controller 360. Based on the input track jump control signal, the servo controller 360 transmits the driving pulse to the objective lens actuator (OL-ACT) to move the blue-violet laser beam 16 to the desired track.

When checking that the blue-violet laser beam 16 reaches the intended address, the signal processing unit 320 starts the data playback from the recording layer 21. Thus, the information can be played back from the intended recording layer 21.

As described above, the red laser beam 15 used to play back the information from the guide layer 20 and the blue-violet laser beam 16 used to record in the recording layer 21 or to play back the information from the recording layer 21 play necessary roles, respectively, thereby implementing the recording and playback of the information in and from the optical disk 10.

As described above, in the information recording and playback apparatus 300 that performs the recording and playback to the super-multilayer-structure optical disk 10, which includes the guide layer 20 independently of the plural recording layers 21, it is necessary to use the two kinds of laser beams, namely, the laser beam (in the embodiment, the red laser beam 15) with which the guide layer 20 of the optical disk 10 is irradiated and the laser beam (in the embodiment, the blue-violet laser beam 16) with which the intended recording layer 21 of the optical disk 10 is irradiated.

Therefore, it is necessary to focus the red laser beam 15 on the guide layer 20 of the optical disk 10; namely, it is necessary to draw the focus of the red laser beam 15 into the guide layer 20, and it is necessary to focus the blue-violet laser beam 16 on the intended recording layer 21 of the optical disk 10; namely, it is necessary to draw the focus of the blue-violet laser beam 16 into the intended recording layer 21.

In this case, the focus of the blue-violet laser beam 16 is drawn into the recording layer 21 by controlling the objective lens (OL) in the focus direction using the objective lens actuator (OL-ACT). The focus of the red laser beam 15 is drawn into the guide layer 20 by controlling the collimator lens (CL2) in the focus direction (the optical axis direction) using the collimator lens actuator (CL-ACT).

In order that the red laser beam 15 is focused on the guide layer 20 of the optical disk 10 while the blue-violet laser beam 16 is focused on the intended recording layer 21 of the optical disk 10, it is necessary to place the two optical paths, namely, the optical path for the red laser beam 15 and the optical path for the blue-violet laser beam 16 in the optical pickup head unit 200. For this reason, the structure of the optical pickup head unit 200 becomes more complex, which results in the enlargement of the optical pickup head unit 200 and therefore the information recording and playback apparatus 300.

In the embodiment, a lens actuator including a simple structure, in which the lens can be driven in the optical axis direction of the lens while downsizing is achieved, will be described. For example, the lens actuator of the embodiment is suitably used in the collimator lens actuator (CL-ACT) that drives the collimator lens (CL2) transmitting the red laser beam 15 in the focus direction (the optical axis direction), and the lens actuator includes the structure contributing to the downsizing of the optical pickup head unit 200.

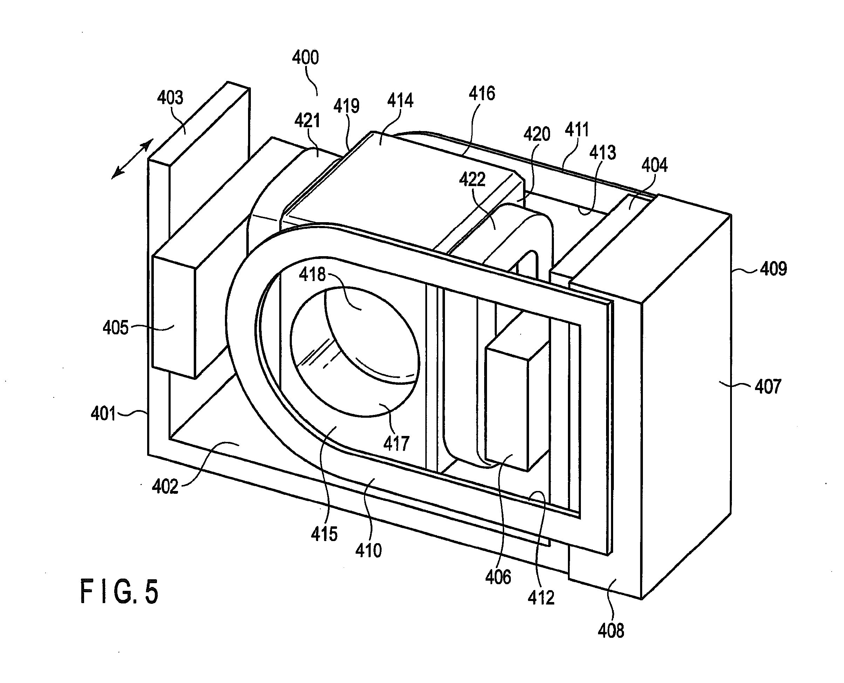

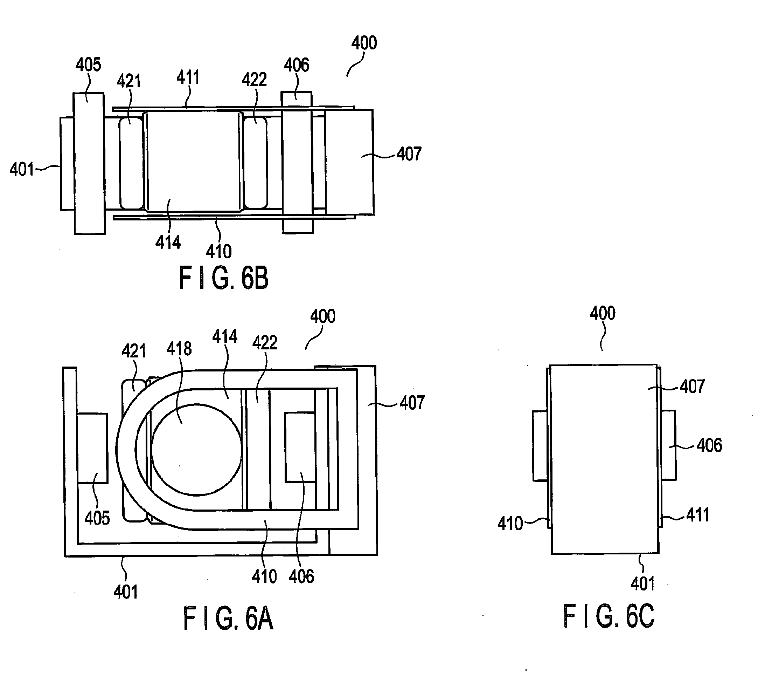

FIG. 5 illustrates an example of an appearance of a lens actuator 400 of the embodiment. FIGS. 6A, 6B, and 6C illustrate an example of the lens actuator 400 when the lens actuator 400 is viewed from a front side, an upper side, and a side surface.

The lens actuator 400 includes a yoke 401 that is of the fixed member. The yoke 401 is formed into a substantially rectangular shape by a plate made of a magnetic material, and a central portion of the yoke 401 constitutes a bottom surface 402 and is fixed to the inside of the optical pickup head unit 200. In this case, the yoke 401 is placed such that the bottom surface 402 is substantially parallel to the surface of the optical disk 10 rotated by the spindle motor 60 (for example, the yoke 401 is horizontally placed).

In the yoke 401, a pair of side surfaces 403 and 404 are formed by bending both end portions in a lengthwise direction of the plate at a substantially right angle with respect to the bottom surface 402 such that the end portions face each other.

In the yoke 401, magnets 405 and 406 are placed in inside surfaces of the pair of side surfaces 403 and 404, namely, the surfaces facing each other, respectively. The magnets 405 and 406 are formed into substantially rectangular solid shapes, and the magnets 405 and 406 are placed such that lengthwise directions of the magnets 405 and 406 are aligned with width directions of the side surfaces 403 and 404, namely, an arrow direction in FIG. 5.

In this case, lengths in the lengthwise directions of the magnets 405 and 406 are longer than widths of the side surfaces 403 and 404 of the yoke 401. For this reason, the magnets 405 and 406 are placed such that both end portions of the magnets 405 and 406 are projected outward from the side surfaces 403 and 404. Therefore, as illustrated in FIG. 6C, the lens actuator 400 is substantially shaped like a cross when viewed from the side surface.

In each of the magnets 405 and 406, an N-pole is formed on one side of the central portion in the lengthwise direction, and an S-pole is formed on the other side. The magnets 405 and 406 are placed such that portions having different polarities face each other. Therefore, a magnetic field is generated between the magnets 405 and 406 to form a magnetic circuit.

In one (in FIG. 5, the side surface 404) of the side surfaces of the yoke 401, a support member 407 is fixed to an outside surface of the side surface 404, namely, a surface on an opposite side of a surface facing the side surface 403. The support member 407 is made of a material having an electrical insulating property, and the support member 407 is formed into a substantially rectangular solid shape so as to cover the whole outside surface of the side surface 404.

At this point, in the support member 407, a length in a direction corresponding to a width direction of the side surface 404 of the yoke 401 is longer than a width of the side surface 404. Therefore, in the support member 407, end surfaces 408 and 409 corresponding to the width direction of the side surface 404 of the yoke 401 are projected outward from the side surface 404 of the yoke 401.

One of end portions of each of the plate springs 410 and 411 that are of the elastic member is fixed to each of the end surfaces 408 and 409 of the support member 407. The other end portion of each of the plate springs 410 and 411 are extended to a substantially central portion of each of the side surfaces 403 and 404 of the yoke 401. Therefore, the plate springs 410 and 411 are parallel to each other, and the plate springs 410 and 411 are placed so as to be substantially orthogonal to the surface of the optical disk 10 rotated by the spindle motor 60.

In this case, the plate springs 410 and 411 are formed into frame shapes in each of which the central portion is opened. In the magnet 406 that is fixed to the side surface 404 of the yoke 401 to which the support member 407 is fixed, both end portions in a lengthwise direction are projected outward through openings 412 and 413 of the plate springs 410 and 411. In FIGS. 5 and 6, the plate springs 410 and 411 are circularly formed. Alternatively, the plate springs 410 and 411 may be discontinuously formed.

A lens holder 414 is fixed to the plate springs 410 and 411 so as to be sandwiched between the end portion on the side fixed to the support member 407 and the end portion on the opposite side. The lens holder 414 is formed into the substantially rectangular solid shape, and end surfaces 415 and 416 corresponding to the width directions of the side surfaces 403 and 404 of the yoke 401 are attached to the plate springs 410 and 411, respectively. At this point, the lens holder 414 is located in the central portion between the magnets 405 and 406.

In the lens holder 414, a through-hole 417 is made between the end surfaces 415 and 416 in the central portions of the end surfaces 415 and 416 corresponding to the width directions of the side surfaces 403 and 404 of the yoke 401. A lens 418 is fixed to the through-hole 417. The lens 418 is placed in the through-hole 417 such that the optical axis direction of the lens 418 is aligned with the width directions of the side surfaces 403 and 404 of the yoke 401. The light is incident to and output from the lens 418 through the openings 412 and 413 of the plate springs 410 and 411.

For this reason, the lens holder 414 is supported while being movable by the elasticity of the plate springs 410 and 411 in the width directions of the side surfaces 403 and 404 of the yoke 401, namely, the direction substantially parallel to the surface of the optical disk 10 rotated by the spindle motor 60. Therefore, the lens 418 is movably supported in the direction substantially parallel to the surface of the rotated optical disk 10 and in the optical axis direction.

In the lens holder 414, coils 421 and 422 are attached to end surfaces 419 and 420 that face the magnets 405 and 406, respectively. The coils 421 and 422 are energized through the plate springs 410 and 411, respectively.

Passage of a current through the coils 421 and 422 can drive the lens 418 in the optical axis direction by the interaction with the magnetic field generated by the magnets 405 and 406. A driving direction or a movement amount of the lens 418 can be controlled by adjusting the direction or magnitude of the current passed through the coils 421 and 422.

At this point, a driving force F generated in the lens 418 is calculated from F = Biln. Where B is the magnetic flux density of the magnets 405 and 406, i is the current passed through the coils 421 and 422, 1 is an effective length of the coil in the magnetic circuit, and n is the total number of turns of the coils 421 and 422.

In the lens actuator 400, the magnets 405 and 406 are provided on both sides of the lens 418, namely, in the direction substantially orthogonal to the optical axis of the lens 418, and the end portions corresponding to the driving direction of the lens 418 are projected outward through the openings 412 and 413 formed in the plate springs 410 and 411 in the magnet 406 attached to the side surface 404 of the yoke 401.

That is, the length necessary to drive the lens 418 is ensured for the magnets 405 and 406, and the width of the yoke 401 is shorter than the length necessary to drive the lens 418. Therefore, in the lens actuator 400, the downsizing can be achieved while a driving distance necessary for the lens 418 is ensured.

In the lens holder 414, the end surfaces 415 and 416 corresponding to the driving direction are attached while sandwiched between the end portions of the plate springs 410 and 411 that are placed substantially in parallel with each other. Therefore, the lens 418 can be translated in the optical axis direction with no tilt.

The lens holder 414 is driven by the magnets 405 and 406 and the coils 421 and 422, which are provided on both the sides of the lens holder 414, so that the lens 418 can be translated in the optical axis direction with no tilt.

The lengths necessary to drive the lens 418 are ensured in the magnets 405 and 406, and the magnets 405 and 406 always face the coils 421 and 422 even if the lens 418 is located at any position in a driving range. Therefore, a stable driving force can always be obtained.

In the lens actuator 400, the end surfaces 408 and 409 of the support member 407 are projected outward from the side surface 404 of the yoke 401. Therefore, the plate springs 410 and 411 are movable without coming into contact with the yoke 401, so that the current can safely be supplied to the coils 421 and 422.

In the lens actuator 400, the lens 418 can be driven at high speed in the optical axis direction. Therefore, like the information recording and playback apparatus 300, the collimator lens actuator (CL-ACT) that drives the collimator lens (CL2) in the focus direction (the optical axis direction) is suitably used in order to draw the focus of the red laser beam 15 into the guide layer 20 of the optical disk 10, namely, in order for the focus servo to focus the red laser beam 15.

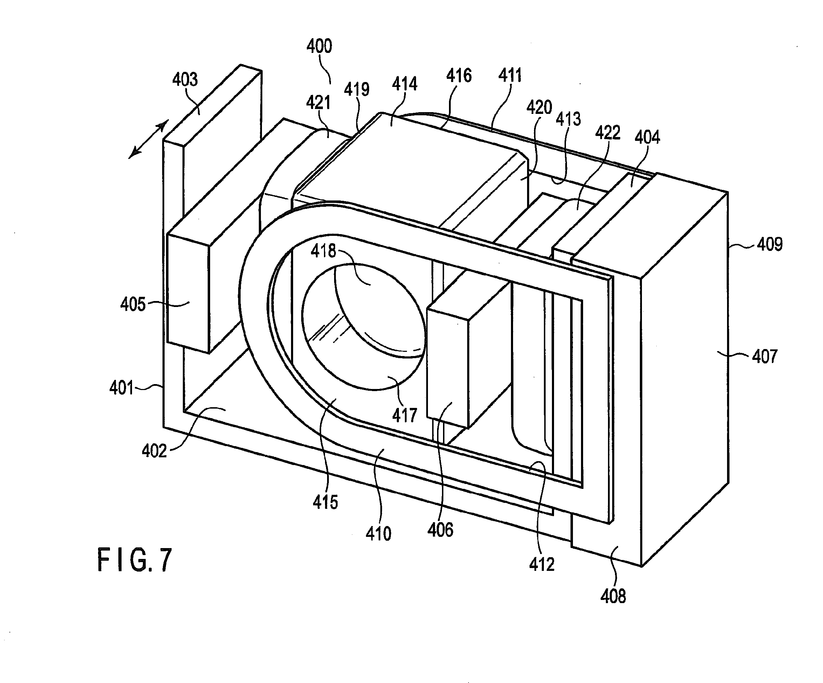

FIG. 7 illustrates a first modification of the lens actuator 400. The first modification in FIG. 7 differs from the lens actuator 400 in FIG. 5 in that the magnet 406 and the coil 422 are interchanged with each other, the magnet 406 is fixed to the side surface 420 of the lens holder 414, and the coil 422 is fixed to the inside surface of the side surface 404 of the yoke 401. The end portions of the magnet 406 are also projected outward through the openings 412 and 413 of the plate springs 410 and 411.

That is, the coil 421 and the magnet 406 are fixed to the movable side (the lens holder 414), and the magnet 405 facing the coil 421 and the coil 422 facing the magnet 406 are fixed to the fixed side (the yoke 401). In the configuration of the first modification, the same effect as the lens actuator 400 in FIG. 5 can substantially be obtained.

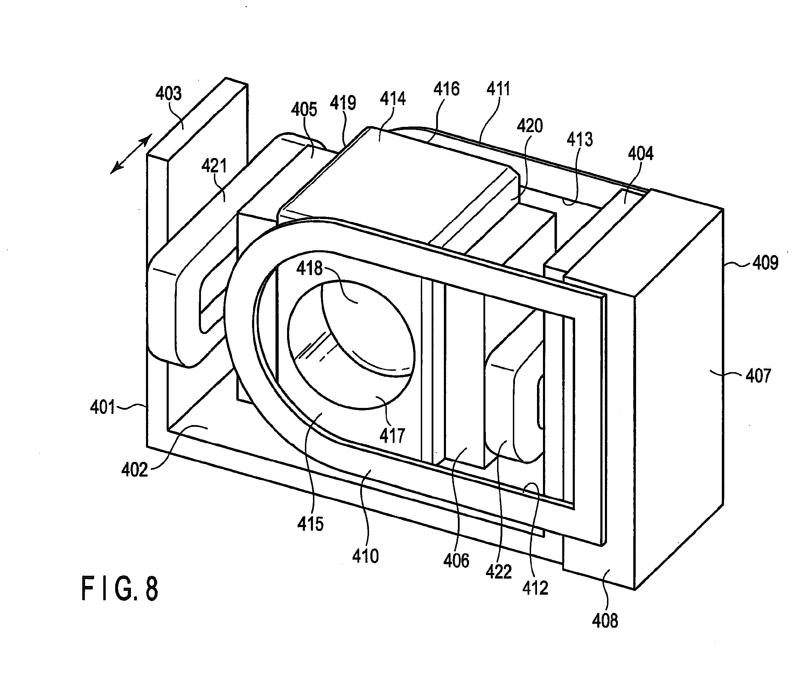

FIG. 8 illustrates a second modification of the lens actuator 400. The second modification in FIG. 8 differs from the lens actuator 400 in FIG. 5 in that the magnet 405 and the coil 421 are interchanged with each other, the magnet 405 is fixed to the side surface 419 of the lens holder 414, and the coil 421 is fixed to the inside surface of the side surface 403 of the yoke 401. The second modification in FIG. 8 also differs from the lens actuator 400 in FIG. 5 in that the magnet 406 and the coil 422 are interchanged with each other, the magnet 406 is fixed to the side surface 420 of the lens holder 414, and the coil 422 is fixed to the inside surface of the side surface 404 of the yoke 401.

In this case, the length necessary to drive the lens 418 is ensured along the optical axis direction of the lens 418 in the coils 421 and 422 fixed to the side surfaces 403 and 404 of the yoke 401. That is, the coils 421 and 422 are placed so as to be projected outward in the width direction from the side surfaces 403 and 404 of the yoke 401. In this case, the coil 422 is projected outward through the openings 412 and 413 of the plate springs 410 and 411.

That is, the magnets 405 and 406 are fixed to the movable side (the lens holder 414), and the coils 421 and 422 facing the magnets 405 and 406 are fixed to the fixed side (the yoke 401). In the configuration of the second modification, the same effect as the lens actuator 400 in FIG. 5 can substantially be obtained.

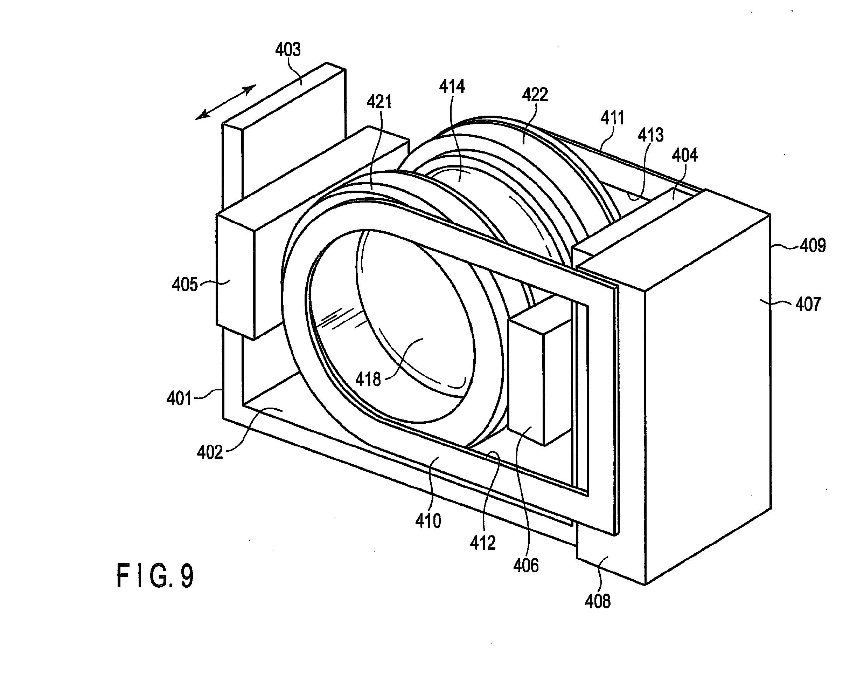

FIG. 9 illustrates a third modification of the lens actuator 400. The third modification in FIG. 9 differs from the lens actuator 400 in FIG. 5 in that the lens holder 414 is formed into the cylindrical shape. The ring coils 421 and 422 are concentrically fixed to the end portions of the cylindrical lens holder 414. In the configuration of the third modification, the same effect as the lens actuator 400 in FIG. 5 can substantially be obtained.

Not only can the lens actuator 400 be used in the optical pickup head unit 200 of the information recording and playback apparatus 300, but also, the lens actuator 400 can be widely used to drive the lens in various electronic instruments that include such lenses.

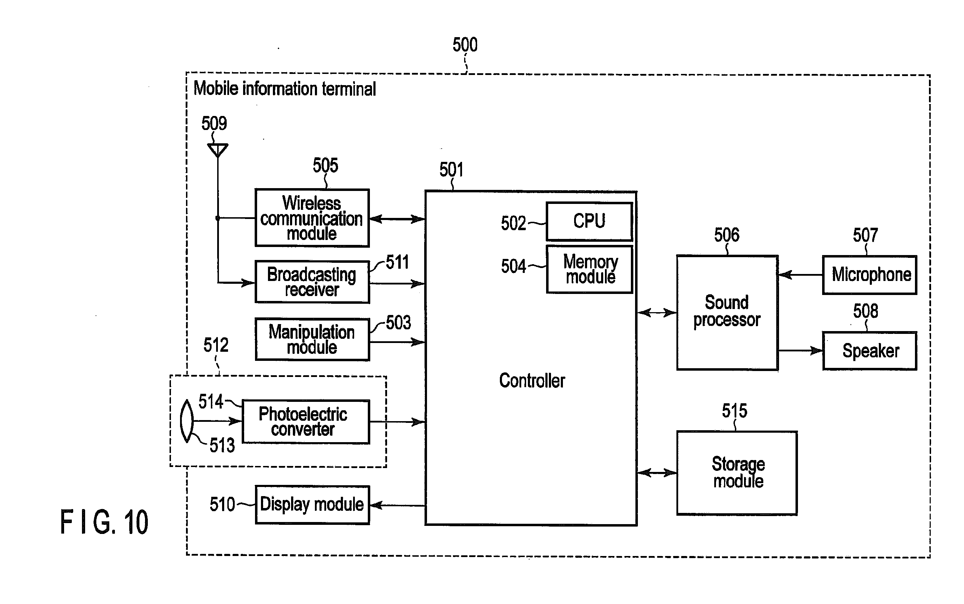

FIG. 10 schematically illustrates an example of a signal processing system of a mobile information terminal 500 that is of the electronic instrument. The mobile information terminal 500 includes a controller 501 that wholly controls all the operations thereof.

For example, the controller 501 is provided with a CPU 502. The controller 501 receives manipulation information from a manipulation module 503, and controls each module such that manipulation content of the module is reflected.

In this case, the controller 501 uses a memory module 504. The memory module 504 mainly includes a read only memory (ROM) in which a control program executed by the CPU 502 is stored, a random access memory (RAM) that provides a work area to the CPU 502, and a nonvolatile memory in which various pieces of setting information and control information are stored.

A wireless communication module 505 and a sound processor 506 are connected to the controller 501. A microphone 507 and a speaker 508 are connected to the sound processor 506. The controller 501 transmits a sound signal, which is collected by the microphone 507 and supplied through the sound processor 506, from an antenna 509 through the wireless communication module 505. The controller 501 supplies a signal, which is received by the antenna 509 and supplied through the wireless communication module 505, to the speaker 508 through the sound processor 506, and plays back the signal as the sound signal. Therefore, the controller 501 implements a telephone function.

The controller 501 controls transmission and reception of an electronic mail through the wireless communication module 505 and the antenna 509. In this case, the controller 501 causes a display module 510 to display a sentence of the transmitted and received electronic mail.

The controller 501 accesses a server (not illustrated), which is connected to a network, such as the Internet, through the wireless communication module 505 and the antenna 509, and the controller 501 can acquire necessary information from the server by wireless communication.

A broadcasting receiver 511 may be connected to the controller 501. The broadcasting receiver 511 tunes and demodulates a broadcasting signal of a desired channel from broadcasting signals received through the antenna 509, generates a video signal and a sound signal, and supplies the video signal and the sound signal to the controller 501. Therefore, the controller 501 causes the display module 510 to display a video picture based on the video signal, and causes the speaker 508 to play back a sound based on the sound signal, thereby implementing a broadcasting receiving function.

An imaging module 512 is connected to the controller 501. In the imaging module 512, a photoelectric converter 514 converts an optical image of a subject incident through an imaging lens 513 into a video signal, and the video signal is supplied to the controller 501. The controller 501 stores the video signal supplied from the imaging module 512 in a storage module 515, thereby implementing a camera function.

The controller 501 also includes a function of reading the video signal or sound signal of copyright protected content that is stored in an external storage device (not illustrated) detachably attached to the mobile information terminal 500.

The controller 501 can store various video signals and sound signals, which are transmitted and received by the telephone function, the electronic mail function, the broadcasting receiving function, the camera function, and the network access function, in the storage module 515.

The lens actuator 400 can be used to support the imaging lens 513 constituting the imaging module 512 of the mobile information terminal 500.

## Claims

1. A lens driving device **characterized by** comprising:
a movable member (414) configured to retain a lens (418) and a coil (421, 422);
a fixed member (401, 407) configured to support the movable member (414) such that the movable member (414) is movable in an optical axis direction of the lens (418) using an elastic member (410, 411); and
a magnet (405, 406) configured to generate a driving force for the movable member (414) by interaction with the coil (421, 422) provided in the fixed member (401, 407),
wherein at least the coil (421, 422) or the magnet (405, 406) is projected in a direction orthogonal to an optical axis of the lens (418) from the fixed member (401, 407).

2. The lens driving device of Claim 1, **characterized in that** at least the coil (421, 422) or the magnet (405, 406) is projected in the direction orthogonal to the optical axis of the lens (418) from the fixed member (401, 407) through an opening formed in the elastic member (410, 411).

3. A lens driving device **characterized by** comprising:
a movable member (414) configured to retain a lens (418) and a magnet (405, 406);
a fixed member (401, 407) configured to support the movable member (414) such that the movable member (414) is movable in an optical axis direction of the lens (418) using an elastic member (410, 411); and
a coil (421, 422) configured to generate a driving force for the movable member (414) by interaction with the magnet (410, 411) provided in the fixed member (401, 407),
wherein at least the magnet (410, 411) or the coil (421, 422) is projected in a direction orthogonal to an optical axis of the lens (418) from the fixed member (401, 407).

4. The lens driving device of Claim 3, **characterized in that** at least the magnet (410, 411) or the coil (421, 422) is projected in the direction orthogonal to the optical axis of the lens (418) from the fixed member (401, 407) through an opening formed in the elastic member (410, 411).

5. A lens driving device **characterized by** comprising:
a movable member (414) configured to retain a lens (418), a first coil (421), and a first magnet (406);
a fixed member (401, 407) configured to support the movable member (414) such that the movable member (414) is movable in an optical axis direction of the lens (418) using an elastic member (410, 411);
a second magnet (405) configured to generate a driving force for the movable member (414) by interaction with the first coil (421) provided in the fixed member (401, 407); and
a second coil (422) configured to generate a driving force for the movable member (414) by interaction with the first magnet (406) provided in the fixed member (401, 407),
wherein at least one of the first and second magnets (406, 405) and the first and second coils (421, 422) is projected in a direction orthogonal to an optical axis of the lens (418) from the fixed member (401, 407).

6. The lens driving device of Claim 5, **characterized in that** at least one of the first and second magnets (406, 405) and the first and second coils (421, 422) is projected in the direction orthogonal to the optical axis of the lens (418) from the fixed member (401, 407) through an opening formed in the elastic member (410, 411).

7. An information recording and playback apparatus configured to record information in an information recording medium (10) and play back information from an information recording medium (10) by irradiating the information recording medium (10) with a laser beam through a lens (418) that is driven in an optical axis direction by the lens driving device as in any one of Claims 1 to 6.

8. An electronic instrument configured to use a lens (418) that is driven in an optical axis direction by the lens driving device as in any one of Claims 1 to 6.
